(19) Europäisches Patentamt / European Patent Office / Office européen des brevets

(11) **EP 4 269 955 B1**

(12) **FASCICULE DE BREVET EUROPEEN**

(45) Date de publication et mention
de la délivrance du brevet:
**07.08.2024 Bulletin 2024/32**

(21) Numéro de dépôt: **23170580.7**

(22) Date de dépôt: **28.04.2023**

(51) Classification Internationale des Brevets (IPC):
**G01F 1/66** (2022.01)    **F16K 37/00** (2006.01)
**G01F 1/667** (2022.01)    **G01F 15/00** (2006.01)
**G01F 1/26** (2006.01)    **G01F 1/36** (2006.01)
**F16K 5/06** (2006.01)

(52) Classification Coopérative des Brevets (CPC):
**G01F 1/667; F16K 5/0605; F16K 37/005;
G01F 1/26; G01F 1/36; G01F 1/662; G01F 15/005**

(54) **COMPTEUR DE FLUIDE À ULTRASONS INTÉGRANT UN CAPTEUR DE PRESSION**

ULTRASCHALL-FLÜSSIGKEITSZÄHLER MIT INTEGRIERTEM DRUCKSENSOR

ULTRASONIC FLUID METER INCORPORATING A PRESSURE SENSOR

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **29.04.2022 FR 2204101**

(43) Date de publication de la demande:
**01.11.2023 Bulletin 2023/44**

(73) Titulaire: **Sagemcom Energy & Telecom SAS
92270 Bois-Colombes (FR)**

(72) Inventeurs:
  • **SABRAOUI, Abbas
    92500 Rueil-Malmaison (FR)**
  • **BASTURK, Ahmet Samed
    92270 Bois-Colombes (FR)**
  • **ABID, Oussama
    92270 Bois-Colombes (FR)**

(74) Mandataire: **Cabinet Boettcher et al
5, rue de Vienne
75008 Paris (FR)**

(56) Documents cités:
**EP-A1- 3 643 955        DE-A1- 102019 105 948
US-A1- 2020 256 713**

**Description**

L'invention concerne le domaine des compteurs de fluide à ultrasons.

ARRIERE PLAN DE L'INVENTION

Un compteur de fluide à ultrasons comporte très classiquement un conduit dans lequel circule le fluide, et un dispositif de mesure ultrasonique comprenant un transducteur amont (côté réseau) et un transducteur aval (côté installation de l'abonné). Chaque transducteur joue successivement le rôle d'un émetteur et d'un récepteur de signaux ultrasonores. Le transducteur amont émet ainsi un signal ultrasonore dans le conduit, qui est reçu par le transducteur aval après avoir parcouru dans le fluide un chemin prédéfini (de longueur parfaitement maîtrisée). Puis, le transducteur aval émet à son tour un signal ultrasonore, qui est reçu par le transducteur amont après avoir parcouru dans le fluide le chemin prédéfini (dans l'autre sens). Le dispositif de mesure ultrasonique évalue alors le débit du fluide à partir des temps de vol des signaux ultrasonores entre les transducteurs. L'estimation du débit du fluide permet d'évaluer et de facturer la quantité de fluide consommée.

Dans certains pays, les compteurs doivent être capables de limiter, réguler, et de couper le débit du fluide. Par exemple, dans certains pays et dans le cas d'une facture d'eau impayée, le distributeur d'eau doit assurer au client final « mauvais payeur » un débit minimal durant un certain nombre de jours avant de lui couper totalement l'accès à l'eau.

Ce débit minimal peut varier en fonction du pays et du client, et il est donc nécessaire d'avoir la possibilité de réguler le débit « à la demande » : le débit doit être adapté en fonction d'une consigne de débit.

On a envisagé, pour réaliser la régulation du débit, d'intégrer dans le conduit du compteur une vanne à bille motorisée. La position angulaire de la bille peut être commandée à distance pour réguler le débit.

Cependant, l'encombrement du compteur doit être limité, et il peut être nécessaire de positionner la vanne dans la zone de mesure du débit, c'est-à-dire entre les deux transducteurs.

Or, lorsque la vanne est insuffisamment ouverte, les signaux ultrasonores ne peuvent pas cheminer normalement dans le conduit en suivant le chemin prédéfini.

Il est donc impossible de mesurer et de réguler le débit pour certaines positions angulaires de la bille.

Le document DE102019105948A1 divulgue un compteur de fluide à ultrasons.

OBJET DE L'INVENTION

L'invention a pour objet, dans un compteur de fluide à ultrasons comprenant un conduit dans lequel circule le fluide et une vanne positionnée dans le conduit, de pouvoir mesurer et réguler le débit du fluide quel que soit l'état de la vanne (ouverte, fermée, partiellement ouverte).

RESUME DE L'INVENTION

En vue de la réalisation de ce but, on propose un compteur de fluide à ultrasons comportant :

- un conduit dans lequel un fluide peut circuler ;
- un dispositif de mesure ultrasonique comprenant deux transducteurs agencés pour émettre et recevoir des signaux ultrasonores dans le conduit, le dispositif de mesure ultrasonique étant agencé pour évaluer un débit courant du fluide à partir de temps de vol des signaux ultrasonores entre les transducteurs ;

- une vanne positionnée, selon une longueur du conduit, entre les deux transducteurs, la vanne comprenant un organe mobile qui s'étend dans le conduit et dont une position courante peut être commandée pour contrôler le débit courant du fluide ;
- un capteur de position agencé pour mesurer la position courante de l'organe mobile ;
- un capteur de pression agencé pour mesurer une pression du fluide dans le conduit ;
- un circuit de traitement agencé pour, si la position courante de l'organe mobile est telle que le débit courant ne peut pas être mesuré par le dispositif de mesure ultrasonique, évaluer le débit courant en fonction de la position courante de l'organe mobile, de la pression du fluide au débit courant, et de la pression du fluide à débit nul.

Ainsi, dans le compteur selon l'invention, lorsque l'organe mobile de la vanne obstrue le conduit de sorte que le dispositif ultrasonique n'est pas opérationnel, les mesures de pression produites par le capteur de pression peuvent être utilisées pour évaluer et réguler le débit courant de fluide.

Dans un mode de réalisation, le capteur de pression est positionné en amont de la vanne.

Dans un mode de réalisation, le circuit de traitement est agencé, pour évaluer la pression du fluide à débit nul, pour :

- ouvrir entièrement la vanne ;
- utiliser le dispositif de mesure ultrasonique pour mesurer le débit courant ;
- attendre que le débit courant soit nul ;
- acquérir alors au moins une mesure de pression produite par le capteur de pression.

Dans un mode de réalisation, le circuit de traitement est agencé, pour évaluer la pression du fluide à débit nul, pour :

- fermer entièrement la vanne ;
- acquérir alors au moins une mesure de pression produite par le capteur de pression.

Dans un mode de réalisation, le circuit de traitement est agencé pour, si la position courante de l'organe mobile est telle que le débit courant peut être mesuré par le dispositif de mesure ultrasonique, consolider la mesure du débit courant du fluide, produite par le dispositif de mesure ultrasonique, en utilisant la pression du fluide.

Dans un mode de réalisation, le fluide est un fluide compressible, le compteur selon l'invention comprend en outre un capteur de température agencé pour mesurer une température du fluide dans le conduit, le circuit de traitement étant agencé pour, si la position courante de l'organe mobile est telle que le débit courant ne peut pas être mesuré par le dispositif de mesure ultrasonique, utiliser aussi la température du fluide pour évaluer le débit courant.

Dans un mode de réalisation, la vanne est une vanne à bille.

On propose de plus un procédé de mesure d'un débit courant d'un fluide, mis en oeuvre dans le circuit de traitement d'un compteur de fluide à ultrasons tel que précédemment décrit, et comprenant l'étape, si la position courante de l'organe mobile est telle que le débit courant ne peut pas être mesuré par le dispositif de mesure ultrasonique, d'évaluer le débit courant en fonction de la position courante de l'organe mobile, de la pression du fluide au débit courant, et de la pression du fluide à débit nul.

Dans un mode de réalisation, le procédé de mesure tel que précédemment décrit comprend les étapes, si la position courante de l'organe mobile est telle que le débit courant ne peut pas être mesuré par le dispositif de mesure ultrasonique, de :

- mesurer la position courante de l'organe mobile ;
- ouvrir entièrement la vanne ;
- utiliser le dispositif de mesure ultrasonique pour mesurer le débit courant ;
- attendre que le débit courant soit nul ;
- acquérir alors au moins une mesure de pression produite par le capteur de pression, et évaluer ainsi la pression du fluide à débit nul ;
- remettre l'organe mobile dans ladite position courante ;
- acquérir alors au moins une mesure de pression produite par le capteur de pression, et évaluer ainsi la pression du fluide au débit courant ;
- estimer le débit courant en fonction de ladite position courante de l'organe mobile, de la pression du fluide au débit courant, et de la pression du fluide à débit nul.

Dans un mode de réalisation, le procédé de mesure tel que précédemment décrit comprend en outre les étapes de :

- détecter un intervalle de temps qui s'étend entre un temps t1 et un temps t2 tels que :

  ◦ au temps t1, une valeur de la pression du fluide passe d'une valeur égale à une pression du réseau à une autre valeur ;
  ◦ au temps t2, la valeur de la pression du fluide redevient égale à la pression du réseau ;

- intégrer le débit courant sur l'intervalle de temps [tl ; t2] pour calculer le volume consommé.

On propose de plus un programme d'ordinateur comprenant des instructions qui conduisent le circuit de traitement du compteur tel que précédemment décrit à exécuter les étapes du procédé de mesure tel que précédemment décrit.

On propose de plus un support d'enregistrement lisible par ordinateur, sur lequel est enregistré le programme d'ordinateur tel que précédemment décrit.

On propose de plus un procédé de régulation d'un débit courant d'un fluide, mis en oeuvre dans le circuit de traitement d'un compteur de fluide à ultrasons tel que précédemment décrit, et comprenant les étapes de :

- acquérir une consigne de débit ;
- mesurer le débit courant en utilisant le procédé de mesure tel que précédemment décrit ;
- adapter la position courante de l'organe mobile en fonction d'un écart entre la consigne de débit et le débit courant.

On propose de plus un programme d'ordinateur comprenant des instructions qui conduisent le circuit de traitement du compteur tel que précédemment décrit à exécuter les étapes du procédé de régulation tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en oeuvre particuliers non limitatifs de l'invention.

BREVE DESCRIPTION DES DESSINS

Il sera fait référence aux dessins annexés parmi lesquels :

[Fig. 1] la figure 1 représente un compteur de fluide à ultrasons selon un premier mode de réalisation de l'invention ;
[Fig. 2] la figure 2 représente schématiquement deux transducteurs dans le conduit ;
[Fig. 3] la figure 3 représente un tableau d'une deuxième table de référence ;
[Fig. 4] la figure 4 représente des étapes d'un procédé de mesure ;
[Fig. 5] la figure 5 représente un graphique comprenant des courbes de variation du débit en fonction de l'angle d'ouverture de la vanne, pour différentes valeurs de pression du réseau ;
[Fig. 6] la figure 6 représente des tableaux d'une troisième table de référence ;
[Fig. 7] la figure 7 représente des étapes d'un procédé de régulation ;
[Fig. 8] la figure 8 représente un graphique comprenant une courbe de la vitesse du son dans l'eau en fonction de la pression à 20°C ;
[Fig. 9] la figure 9 représente un graphique sur lequel on voit l'évolution de la pression mesurée dans le conduit lorsque l'installation commence puis cesse de consommer de l'eau ;
[Fig. 10] la figure 10 représente un compteur de fluide à ultrasons selon un deuxième mode de réalisation de l'invention ;
[Fig. 11] la figure 11 représente un compteur de fluide à ultrasons selon un troisième mode de réalisation de l'invention.

DESCRIPTION DETAILLEE DE L'INVENTION

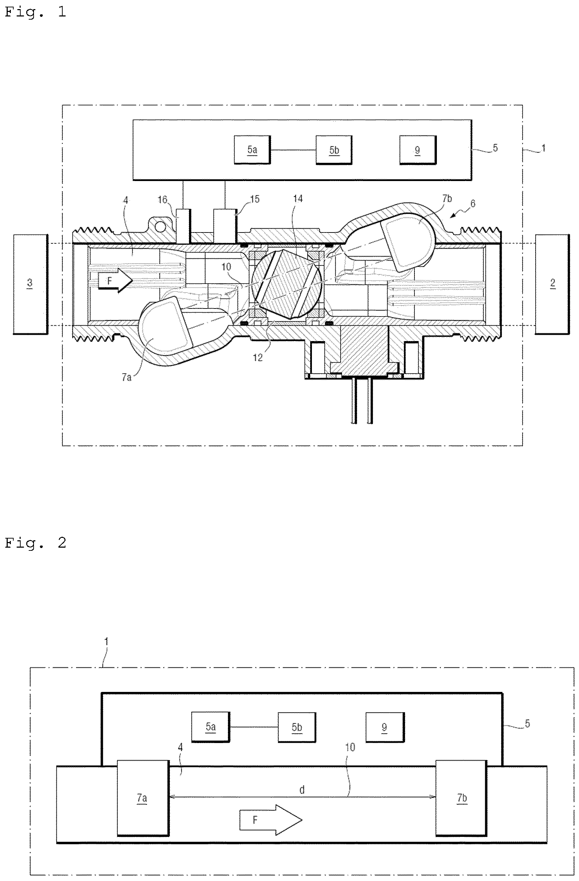

En référence aux figures 1 et 2, l'invention est mise en oeuvre dans un compteur de fluide à ultrasons 1. Le compteur 1 est en l'occurrence ici un compteur d'eau, qui est utilisé pour mesurer la consommation d'eau de l'installation d'un abonné 2. L'eau est fournie à l'installation de l'abonné 2 par un réseau de distribution d'eau 3.

Le compteur 1 comporte un conduit 4 dans lequel circule l'eau fournie par le réseau 3 à l'installation 2. L'eau circule dans le conduit 4 d'amont en aval, comme cela est indiqué par le sens de la flèche F. Ici, par « en amont », on entend du côté du réseau 3, et par « en aval », on entend du côté de l'installation 2.

Le compteur 1 comporte un circuit de traitement 5. Le circuit de traitement 5 comprend au moins un composant de traitement 5a, qui est par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Spécifie Integrated Circuit*). Le circuit de traitement 5 comprend aussi une ou des mémoires 5b, reliées à ou intégrées dans le composant de traitement 5a. Au moins l'une de ces mémoires 5b forme un support d'enregistrement lisible par ordinateur, sur lequel est enregistré au moins un programme d'ordinateur comprenant des instructions qui conduisent le composant de traitement 5a à exécuter au moins certaines des étapes du procédé de mesure et du procédé de régulation qui seront décrits plus bas.

Le compteur 1 comprend aussi un dispositif de mesure ultrasonique 6. Le dispositif de mesure ultrasonique 6 est utilisé « par défaut » pour mesurer le débit d'eau fourni à l'installation 2 par le réseau 3.

Le dispositif de mesure ultrasonique 6 comporte un transducteur amont 7a et un transducteur aval 7b. Le dispositif de mesure ultrasonique 6 comporte aussi un module de traitement 9 relié au transducteur amont 7a et au transducteur aval 7b. Le module de traitement 9 est ici implémenté dans le circuit de traitement 5.

Le transducteur amont 7a et le transducteur aval 7b sont avantageusement (mais pas nécessairement) appairés. Le transducteur amont 7a et le transducteur aval 7b sont ici des transducteurs piézoélectriques.

Chaque transducteur 7a, 7b joue successivement le rôle d'un émetteur et d'un récepteur de signaux ultrasonores.

Le module de traitement 9 génère un signal électrique d'excitation, et fournit à l'émetteur le signal électrique d'excitation. L'émetteur génère alors un signal ultrasonore. Le récepteur reçoit le signal ultrasonore après que celui-ci a parcouru dans le fluide un chemin prédéfini 10, et le module de traitement 9 mesure le temps de vol.

Le chemin prédéfini 10 est ici un chemin direct (incliné par rapport à un axe longitudinal du conduit 4, comme c'est le cas sur la figure 1, ou parallèle audit axe, comme c'est le cas sur la figure 2). Le chemin prédéfini 10 a une longueur d, qui est connue très précisément.

Ainsi, le transducteur amont 7a émet tout d'abord le signal ultrasonore, qui est reçu par le transducteur aval 7b. Le module de traitement 9 mesure le temps de vol d'amont en aval $TOF_{UP}$.

Puis, le transducteur aval 7b émet le signal ultrasonore, qui est reçu par le transducteur amont 7a. Le module de traitement 9 mesure le temps de vol d'aval en amont $TOF_{DN}$.

Or, on a :

$$TOF_{UP} = \frac{d}{c - v_{fluid}}$$

$$TOF_{DN} = \frac{d}{c + v_{fluid}}$$

où c est la vitesse du son dans l'eau, d est la longueur du chemin prédéfini 10, et $v_{fluid}$ est la vitesse de l'écoulement de l'eau.

On définit $\Delta_{TOF}$ et $\Sigma_{TOF}$ :

$$\Delta_{TOF} = TOF_{DN} - TOF_{UP}$$

$$\Sigma_{TOF} = TOF_{DN} + TOF_{UP}$$

Le module de traitement 9 calcule la vitesse du son via la moyenne des deux temps de vol (aller et retour), qui est indépendante de l'écoulement du fluide :

$$c = \frac{2d}{\Sigma_{TOF}}$$

Le module de traitement 9 calcule la vitesse de l'écoulement de l'eau comme suit :

$$v_{fluid} = \frac{1}{2} \cdot \left( \frac{d}{TOF_{UP}} - \frac{d}{TOF_{DN}} \right)$$

$$v_{fluid} = \frac{d}{2} \cdot \frac{TOF_{DN} - TOF_{UP}}{TOF_{UP} \cdot TOF_{DN}}$$

$$v_{fluid} \approx 2d \cdot \frac{\Delta_{TOF}}{\Sigma_{TOF}^2}$$

La température est calculée à partir de la vitesse du son, par exemple via une approximation polynomiale, sans prendre en compte la pression si celle-ci n'est pas mesurée :

$$T = \sum_{i=0}^{N} a_i \times c^i$$

A partir de ces données, le débit Q de l'eau est calculé comme suit :

$$Q = K_T . v = K_T \cdot \frac{\Delta_{TOF}}{(\Sigma_{TOF})^2} = K_T . \frac{\Delta_{TOF}}{2d} . c^2$$

Le facteur $K_T$ est homogène à une surface et est, entre autres, corrélé à la section du conduit 4. Le facteur $K_T$ est issu d'une première table de référence, en fonction de la température de l'eau. La première table de référence est enregistrée dans une mémoire 5b du circuit de traitement 5. Pour un $\Delta_{TOF}$ mesuré, la température est calculée via la vitesse du son. Ensuite, le $K_T$ est obtenu via la première table de référence en fonction de la température calculée précédemment.

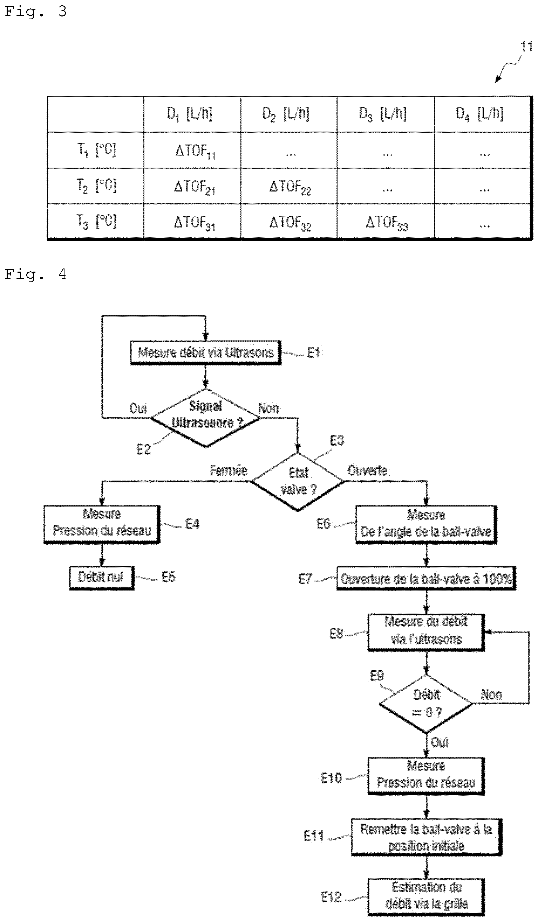

Il est possible, en référence à la figure 3, pour limiter les calculs complexes (et donc le temps de calcul et la consommation d'énergie), d'utiliser une deuxième table de référence 11 pour estimer le débit de l'eau. Cette deuxième table de référence 11 est par exemple en deux dimensions : température vs débit. La deuxième table de référence 11 est enregistrée dans une mémoire 5b du circuit de traitement 5.

La deuxième table de référence 11 comprend ici un unique tableau.

Par exemple, si la température est égale à $T_1$, et que le $\Delta_{TOF}$ est égal à $\Delta TOF_{11}$, le module de traitement 9 en déduit que le débit est égal à $D_1$.

Le compteur 1 comprend aussi une vanne 12 qui permet de réguler, limiter ou couper le débit d'eau. La vanne 12 est visible sur la figure 1 mais n'est pas représentée sur la figure 2.

La vanne 12 est positionnée, selon une longueur du conduit 4, entre les deux transducteurs 7a, 7b.

La vanne 12 est une vanne multi-position motorisée (électromécanique). La vanne 12 comprend un organe mobile qui s'étend dans le conduit 4 et dont une position courante peut être commandée pour contrôler le débit courant du fluide. Ici, la vanne 12 est une vanne à bille et l'organe mobile est donc une bille 14 ; la position courante de la bille 14 est une position angulaire.

Le compteur 1 comprend aussi un capteur de position 15 agencé pour mesurer la position courante de la bille 14.

Le compteur 1 comprend de plus des moyens de communication qui sont susceptibles de mettre en oeuvre tout type de communication, et par exemple une communication via un réseau cellulaire de type 2G, 3G, 4G, Cat-M ou NB-IOT, une communication selon le protocole LoRa, une communication radio selon le standard *Wize* opérant à la fréquence de 169MHz, etc.

Les moyens de communication permettent notamment au circuit de traitement 5 de recevoir, de l'extérieur, une consigne de débit. La consigne de débit est par exemple transmise par un SI (pour Système d'Information) du distributeur d'eau ou du gestionnaire du réseau, éventuellement via un concentrateur de données.

Le circuit de traitement 5 acquiert la consigne de débit, la position courante de la bille 14 (mesurée par le capteur de position 15), et peut ainsi réguler le débit courant en modifiant si nécessaire la position angulaire de la bille 14. On note que le circuit de traitement 5 est aussi capable de piloter la vanne 12 de manière autonome (c'est à dire sans recevoir de consigne de l'extérieur). On note aussi que la vanne 12 pourrait être pilotée via une consigne différente, par exemple via une consigne de position angulaire de la bille 14.

Le compteur 1 comprend aussi un capteur de pression 16 qui est positionné dans le conduit 4. Le capteur de pression 16 est ici situé en amont de la vanne 12, à peu près en face du transducteur amont 7a. Le capteur de pression 16 permet de mesurer la pression instantanée du fluide dans le conduit 4.

Comme on l'a vu précédemment, le dispositif de mesure ultrasonique 6 est utilisé par défaut pour mesurer le débit courant.

Cependant, il est possible, lorsque la vanne 12 n'est pas suffisamment ouverte (c'est-à-dire pour certaines positions angulaires de la bille 14), que la bille 14 empêche les signaux ultrasonores de cheminer entre les transducteurs 7a, 7b : la vanne 12 obstrue le champ ultrasonore et le débit d'eau ne peut alors pas être mesuré par le dispositif de mesure ultrasonique 6. Dans ce cas, le circuit de traitement 5 utilise le capteur de pression 16 pour mesurer le débit courant de l'eau dans le conduit 4.

En effet, la vanne 12 agit comme un organe déprimogène, amplifiant la perte de charge entre son entrée et sa sortie.

Lorsque la vanne 12 est ouverte ou partiellement ouverte et que le débit courant est nul, la pression mesurée est la pression du réseau en ce point (pression statique).

Pour une pression du réseau donnée avec vanne fermée, l'ouverture de la vanne va faire varier (chuter) la pression : il y aura une différence entre la pression à débit nul et la pression avec débit.

Le changement de section (conduit, vanne, etc.) génère des variations de vitesse et donc de pression. La pression instantanée mesurée (pour une pression de réseau constante) est donc à l'image du débit courant.

Lorsque la vanne 12 est fermée, le débit courant est nul, et la pression mesurée est la pression du réseau en ce point (pression statique).

Lorsque la position courante de la bille 14 est telle que le débit courant ne peut pas être mesuré par le dispositif de mesure ultrasonique 6, c'est-à-dire lorsque la vanne 12 est dans une position semi-ouverte et que la mesure des ultrasons est impossible, le circuit de traitement 5 évalue le débit courant en fonction de la position angulaire courante de la bille 14, de la pression du fluide au débit courant et de la pression du fluide à débit nul.

En référence à la figure 4, on décrit plus précisément le procédé de mesure mis en oeuvre dans ce cas par le circuit de traitement 5.

Le circuit de traitement 5 tente tout d'abord de mesurer le débit courant en utilisant le dispositif de mesure ultrasonique 6 (étape E1).

Le circuit de traitement 5 vérifie si les signaux ultrasonores peuvent cheminer librement entre les transducteurs 7a, 7b, et donc si la position courante de la bille 14 est telle que le débit courant peut être mesuré par le dispositif de mesure ultrasonique 6 (étape E2). Si c'est le cas, le circuit de traitement 5 utilise le dispositif de mesure ultrasonique 6 pour mesurer le débit courant.

Sinon, le circuit de traitement 5 acquiert la position courante de la bille 14 (via le capteur de position 15) : étape E3.

Si la vanne 12 est fermée, le circuit de traitement 5 acquiert au moins une mesure de pression produite par le capteur de pression 16 (étape E4), et évalue ainsi la pression de l'eau à débit nul (étape E5).

Si la vanne 12 est partiellement ouverte, le circuit de traitement 5 mesure la position courante de la bille 14 (étape E6).

Le circuit de traitement 5 ouvre alors entièrement la vanne (à 100%) : étape E7.

Le circuit de traitement 5 utilise alors le dispositif de mesure ultrasonique 6 pour mesurer le débit courant (étape E8).

Le circuit de traitement 5 attend que le débit courant soit nul (étape E9).

Lorsque le débit courant est nul, le circuit de traitement 5 acquiert au moins une mesure de pression produite par le capteur de pression 16, et évalue ainsi la pression de l'eau à débit nul (étape E10).

Le circuit de traitement 5 remet alors la bille 14 dans sa position initiale (c'est-à-dire dans la position courante) : étape E11.

Le circuit de traitement 5 acquiert alors au moins une mesure de pression produite par le capteur de pression 16, et évalue ainsi la pression de l'eau au débit courant. Le circuit de traitement 5 estime alors le débit courant en fonction de la position courante de la bille 14, de la pression de l'eau au débit courant et de la pression de l'eau à débit nul (étape E12).

En utilisant l'hypothèse que la pression statique PS du réseau 3 ne varie pas ou varie faiblement devant la fréquence de mesure de la pression du réseau 3, la différence $\Delta P$ entre la pression du réseau PS et la pression instantanée ($\Delta P$ = PS-PI) est en effet à l'image du débit courant.

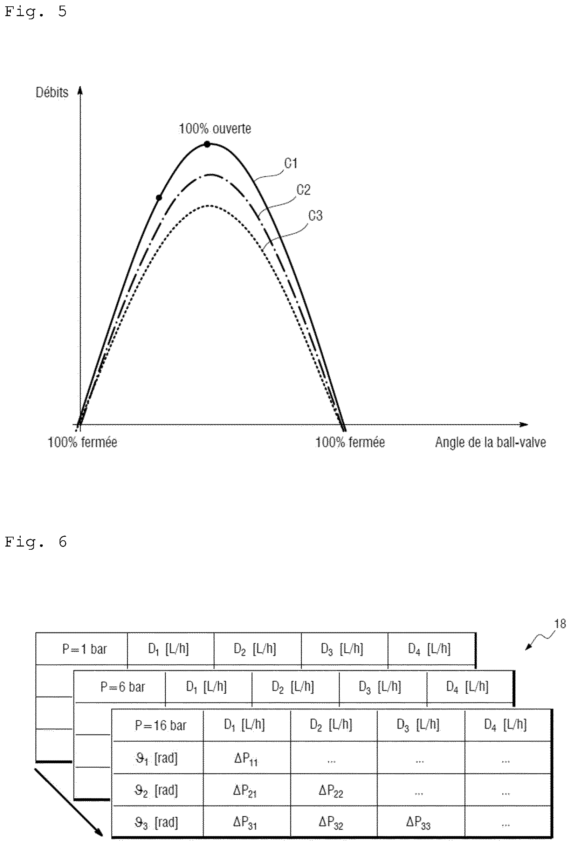

On observe sur la figure 5 la manière dont varie le débit en fonction de la position angulaire de la bille 14 de la vanne 12, et ce, pour différentes valeurs de la pression du réseau : la courbe C1 correspond à une pression du réseau de 16 bars, la courbe C2 à une pression de 6 bars, et la courbe C3 à une pression de 1 bar.

En référence à la figure 6, le circuit de traitement 5 utilise, pour estimer le débit courant, une troisième table de référence 18 qui est enregistrée dans une mémoire 5b du circuit de traitement 5.

La troisième table de référence 18 est une table en trois dimensions, qui comprend par exemple trois tableaux, associés chacun à une pression du réseau PS : PS = 16 bars, PS = 6bars, PS = 1 bar.

Par exemple, si la pression du réseau est PS = 16 bars, et que $\Delta P$ = PS-PI = $\Delta P_{31}$, et que la position angulaire de la bille est $\theta = \theta_3$, le circuit de traitement 5 estime que le débit courant est égal à $D_1$.

On note que la pression statique du réseau PS est considérée comme constante jusqu'à la prochaine mesure. Une fermeture de la vanne 12 peut être programmée dans le but de la mettre à jour si besoin.

En référence de nouveau à la figure 4, on note que les étapes E7, E8 et E9 pourraient être remplacées par une étape consistant simplement à fermer entièrement la vanne 12 (ce qui peut être pénalisant pour l'abonné). Le débit est alors nul. Le circuit de traitement 5 acquiert alors au moins une mesure de pression produite par le capteur de pression 16 pour évaluer la pression de l'eau à débit nul.

Le circuit de traitement 5 peut aussi, si nécessaire, réguler le débit courant.

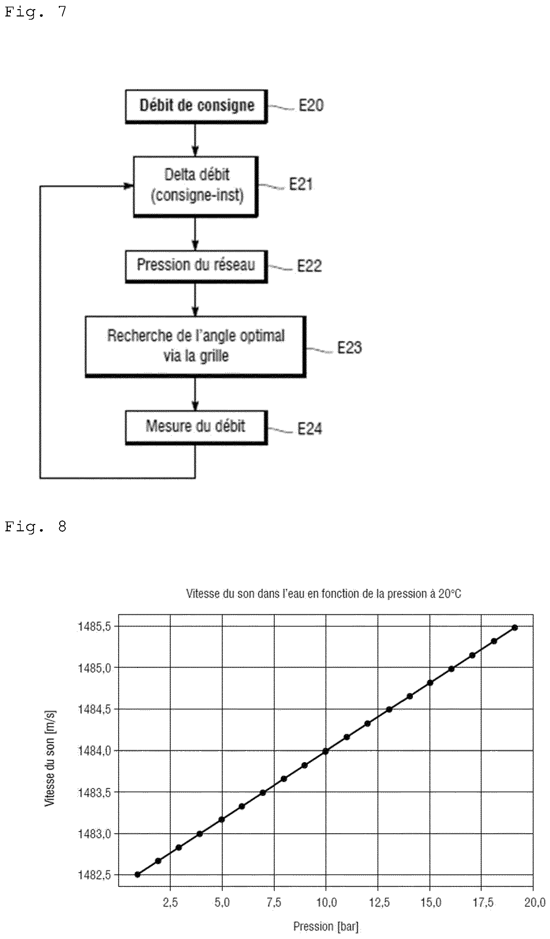

Pour cela, en référence à la figure 7, le circuit de traitement 5 acquiert une consigne de débit (étape E20).

Le circuit de traitement 5 mesure alors le débit courant en utilisant le procédé de mesure qui vient d'être décrit, puis calcule l'écart entre la consigne de débit et le débit courant (étape E21).

Le circuit de traitement 5 adapte alors la position courante de la bille 14 en fonction de cet écart.

Pour cela, le circuit de traitement 5 acquiert la pression du réseau (préalablement mesurée via le procédé de mesure) - étape E22, puis détermine, dans la troisième table de référence 18, la position angulaire optimale de la bille 14 qui permet de conférer au débit courant la valeur de la consigne de débit (étape E23).

Le circuit de traitement 5 pilote alors la vanne 12 pour amener la bille 14 dans la position angulaire optimale.

Le circuit de traitement 5 mesure alors à nouveau le débit courant (étape E24), et le procédé de régulation repasse à l'étape E21. L'asservissement continue jusqu'à aboutir à un écart négligeable entre le débit courant et la consigne de débit.

Avantageusement, si la position courante de la bille 14 est telle que le débit courant peut être mesuré par le dispositif de mesure ultrasonique 6, le circuit de traitement 5 peut consolider la mesure du débit courant, produite par le dispositif de mesure ultrasonique 6, en utilisant la pression de l'eau.

Comme on l'a vu plus tôt, le dispositif de mesure ultrasonique 6 utilise les signaux ultrasonores pour calculer la vitesse du son dans l'eau et la vitesse de l'écoulement de l'eau dans le conduit 4. En effet, la différence entre les temps aller et retour des signaux ultrasonores est l'image de la vitesse de l'écoulement. La somme des temps aller et retour est l'image de la température de l'eau.

Pour obtenir une mesure très précise du débit, il est donc préférable de connaître la température, la vitesse du son dans l'eau, et la pression de l'eau dans le conduit 4.

Généralement, la pression est considérée comme négligeable.

Or, la vitesse du son dans l'eau (comme dans tout fluide) est fonction, entre autres, de la température et de la pression.

Ainsi, à température constante T, la vitesse $c(T,P)$ du son dans l'eau varie en fonction de la pression P comme indiqué dans l'équation de *Belogol'skii et al.* :

$$c(T,P) = c(T,0) + M_1(T) (P-0.101325) + M_2(T) (P-0.101325)^2 + M_3(T) (P-0.101325)^3$$

$$c(T,0) = a_{00} + a_{10}T + a_{20}T^2 + a_{30}T^3 + a_{40}T^4 + a_{50}T^5$$

$$M_1(T) = a_{01} + a_{11}T + a_{21}T^2 + a_{31}T^3$$

$$M_2(T) = a_{02} + a_{12}T + a_{22}T^2 + a_{32}T^3$$

$$M_3(T) = a_{03} + a_{13}T + a_{23}T^2 + a_{33}T^3$$

Les coefficients $a_{00}$, $a_{10}$, $a_{20}$, etc. sont fournis en annexe de la présente description.

On voit sur la figure 8 que la vitesse du son dans l'eau varie en fonction de la pression.

Ainsi, à 20°C, entre un milieu à 1 bar et un milieu à 16 bars (pression maximale d'un réseau d'eau résidentielle), la vitesse du son variera de 1482,5m/s à 1484.99 mis (écart de 2.48m/s). Cet écart correspond une différence de température 0.82°C.

Cet écart peut introduire une erreur dans le calcul du débit via la deuxième table de référence 11 (figure 3).

Il est donc avantageux de prendre en compte la pression lors de la calibration et lors de la mesure pour améliorer la caractérisation du milieu et le calcul du débit.

On peut alors remplacer la deuxième table de référence 11 par une table en trois dimensions, qui comprend, pour différentes valeurs prédéfinies de pression, un tableau semblable au tableau de la figure 3.

Avantageusement, le circuit de traitement 5 peut utiliser le capteur de pression 16 pour évaluer le volume d'eau distribué via le conduit 4.

En effet, en présence de débit, la pression de l'eau va varier.

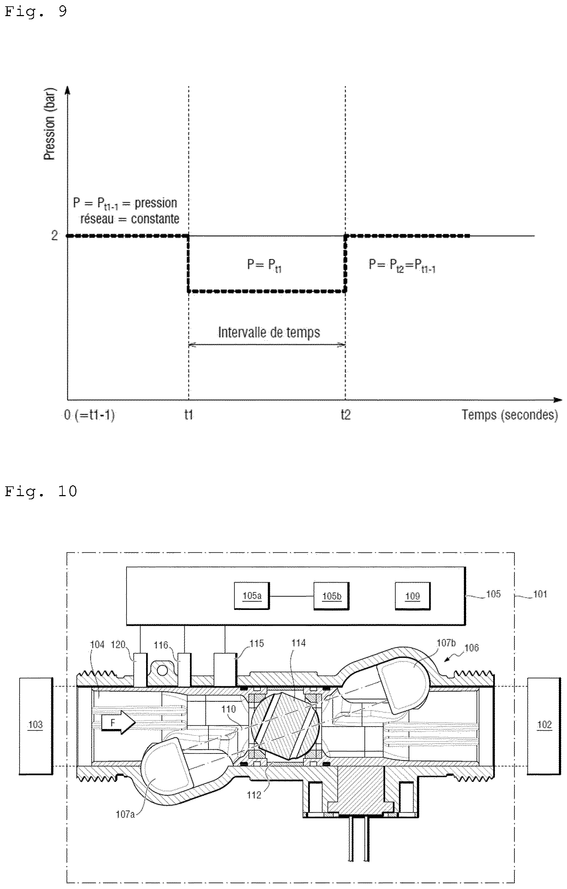

Pour cela, en référence à la figure 9, le circuit de traitement 5 détecte un intervalle de temps qui s'étend entre un temps t1 et un temps t2 tels que :

    o au temps t1, une valeur de la pression de l'eau passe d'une valeur égale à une pression du réseau à une autre valeur ;
    o au temps t2, la valeur de la pression de l'eau redevient égale à la pression du réseau.

Au temps t1, la pression de l'eau $P_{t1}$ est donc différente de la pression de l'eau $P_{t1-1}$ mesurée à un temps t1-1 précédant le temps t1 : $P_{t1} \neq P_{t1\text{-}1}$. La pression $P_{t1\text{-}1}$ est égale à la pression du réseau PS et le temps t1-1 est le temps auquel est réalisée la mesure de pression qui précède directement la mesure réalisée au temps t1. Au temps t2, la pression du fluide $P_{t2}$ redevient égale à la pression $P_{t1\text{-}1}$ : $P_{t2} = P_{t1\text{-}1} = PS$.

La précision de cet intervalle de temps [t1, t2] dépend de la fréquence de mesure du capteur de pression 16.

Le circuit de traitement 5 intègre alors le débit courant sur l'intervalle de temps [tl ; t2] pour calculer le volume consommé :

$$\text{Volume} = \int_{t1}^{t2} Q.dt,$$

où Q est le débit courant (en litres/heure).

On note que l'invention peut bien sûr être mise en oeuvre dans un compteur de fluide autre qu'un compteur d'eau. Le fluide peut en particulier être un fluide compressible (gaz par exemple).

Dans ce cas, avantageusement, en référence à la figure 10, le compteur de fluide à ultrasons 101 selon un deuxième mode de réalisation de l'invention comprend un capteur de température 120 du fluide. Le capteur de température 120 est ici positionné en amont du capteur de pression 116. On remarque que les références de la figure 10 sont celles de la figure 1 augmentées de la valeur 100.

Dans le cas d'un fluide compressible, il est en effet impossible de corréler la perte de charge au débit sans connaître la température.

En effet, on sait que :

$$P.V = n.\ R.T,$$

avec :

P : la pression (Pa) ;
V : le volume (m3) ;
n : la quantité de matière (mol) ;
R : la constante des gaz parfaits ($\approx$ 8,314 J/K/mol) ;
T : la température absolue (K).

On a, à une température donnée :

$$Q = K \times \sqrt{\Delta P},$$

avec :

$\Delta P$ : perte de pression ;
Q : débit en litre par heure.

D'après la loi de *Gay-Lussac,* à volume constant, la pression d'une certaine quantité de gaz est directement proportionnelle à sa température absolue ($P \propto T$) :

$$\frac{P1}{T1} = \frac{P2}{T2}$$

Par conséquent, une variation de pression pourra être due à une variation du débit ou à une variation de température, d'où l'importance de connaître la température absolue pour pouvoir corréler le débit à la perte de pression. Il est donc nécessaire d'intégrer un capteur de température dans le cas des gaz et d'effectuer les mesures à température constante (si un seul capteur de température).

Le circuit de traitement 105 utilise donc une quatrième table de référence en quatre dimensions. Cette quatrième table de référence correspond par exemple à la troisième table de référence 18, à laquelle on ajoute une quatrième dimension correspondant à la température.

Bien entendu, l'invention n'est pas limitée aux modes de réalisation décrits mais englobe toute variante entrant dans le champ de l'invention telle que définie par les revendications.

L'invention s'applique bien sûr quels que soient le positionnement et la configuration du transducteur amont et du transducteur aval. Les signaux ultrasonores peuvent être émis avec une orientation d'un angle quelconque par rapport à un axe longitudinal du conduit.

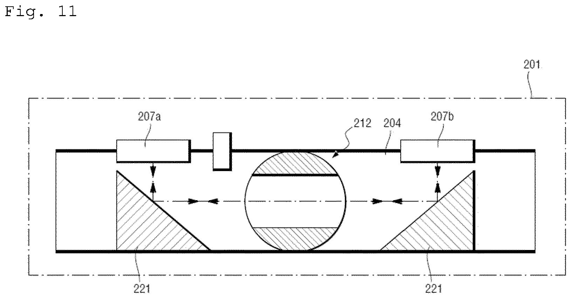

Le chemin prédéfini entre les transducteurs n'est pas nécessairement un chemin direct. On voit sur la figure 11 un compteur de fluide à ultrasons selon un troisième mode de réalisation 201. La vanne à bille 212 est en position ouverte. Les signaux ultrasonores, émis et reçus dans le conduit 204 par les transducteurs 207a, 207b sont réfléchis par des réflecteurs 221, par exemple par des miroirs orientés à 45°.

L'invention ne s'applique bien sûr pas uniquement à un compteur d'eau, mais à tout compteur de tout fluide : gaz, pétrole, huile, médicament, etc.

La vanne n'est pas nécessairement une vanne à bille. Tout type de vanne peut être utilisé pour réguler le débit, par exemple une vanne à tiroir. La position de l'organe mobile, permettant de réguler le débit, n'est pas nécessairement une position angulaire mais peut être une position axiale.

Le capteur de pression n'est pas nécessairement positionné en amont de la vanne, mais pourrait être positionné en aval de celle-ci. Cependant, dans ce cas, la pression mesurée, lorsque la vanne est entièrement fermée, ne correspond pas à la pression du réseau.

<u>Annexe</u> :

Le tableau ci-dessous contient les coefficients utilisés dans l'équation de Belogol'skii et al.

| | |
|---|---|
| $a_{00}$ | 1402.38744 |
| $a_{10}$ | 5.03836171 |
| $a_{20}$ | $-5.81172916 \times 10^{-2}$ |
| $a_{30}$ | $3.34638117 \times 10^{-4}$ |
| $a_{40}$ | $-1.48259672 \times 10^{-6}$ |
| $a_{50}$ | $3.16585020 \times 10^{-9}$ |
| $a_{01}$ | 1.49043589 |
| $a_{11}$ | $1.077850609 \times 10^{-2}$ |
| $a_{21}$ | $-2.232794656 \times 10^{-4}$ |
| $a_{31}$ | $2.718246452 \times 10^{-6}$ |
| $a_{02}$ | $4.31532833 \times 10^{-3}$ |
| $a_{12}$ | $-2.938590293 \times 10^{-4}$ |
| $a_{22}$ | $6.822485943 \times 10^{-6}$ |
| $a_{32}$ | $-6.674551162 \times 10^{-8}$ |
| $a_{03}$ | $-1.852993525 \times 10^{-5}$ |
| $a_{13}$ | $1.481844713 \times 10^{-6}$ |
| $a_{23}$ | $-3.940994021 \times 10^{-8}$ |
| $a_{33}$ | $3.939902307 \times 10^{-10}$ |

**Revendications**

1. Compteur de fluide à ultrasons (1) comportant :

- un conduit (4) dans lequel un fluide peut circuler ;
- un dispositif de mesure ultrasonique (6) comprenant deux transducteurs (7a, 7b) agencés pour émettre et recevoir des signaux ultrasonores dans le conduit, le dispositif de mesure ultrasonique étant agencé pour évaluer un débit courant du fluide à partir de temps de vol des signaux ultrasonores entre les transducteurs ;
- une vanne (12) positionnée, selon une longueur du conduit, entre les deux transducteurs, la vanne comprenant un organe mobile (14) qui s'étend dans le conduit et dont une position courante peut être commandée pour contrôler le débit courant du fluide ;
- un capteur de position (15) agencé pour mesurer la position courante de l'organe mobile ;
- un capteur de pression (16) agencé pour mesurer une pression du fluide dans le conduit ;

**caractérisé en ce que** le compteur de fluide à ultrasons comprend en outre:

- un circuit de traitement (5) agencé pour, si la position courante de l'organe mobile est telle que le débit courant ne peut pas être mesuré par le dispositif de mesure ultrasonique, évaluer le débit courant en fonction de la position courante de l'organe mobile, de la pression du fluide au débit courant, et de la pression du fluide à débit nul.

2. Compteur de fluide à ultrasons selon la revendication 1, dans lequel le capteur de pression (16) est positionné en amont de la vanne (12).

3. Compteur de fluide à ultrasons selon l'une des revendications précédentes, dans lequel le circuit de traitement (5) est agencé, pour évaluer la pression du fluide à débit nul, pour :

   - ouvrir entièrement la vanne (12) ;
   - utiliser le dispositif de mesure ultrasonique (6) pour mesurer le débit courant ;
   - attendre que le débit courant soit nul ;
   - acquérir alors au moins une mesure de pression produite par le capteur de pression (16).

4. Compteur de fluide à ultrasons selon la revendication 2, dans lequel le circuit de traitement est agencé, pour évaluer la pression du fluide à débit nul, pour :

   - fermer entièrement la vanne (12) ;
   - acquérir alors au moins une mesure de pression produite par le capteur de pression (16).

5. Compteur de fluide à ultrasons selon l'une des revendications précédentes, dans lequel le circuit de traitement (5) est agencé pour, si la position courante de l'organe mobile (14) est telle que le débit courant peut être mesuré par le dispositif de mesure ultrasonique (6), consolider la mesure du débit courant du fluide, produite par le dispositif de mesure ultrasonique, en utilisant la pression du fluide.

6. Compteur de fluide à ultrasons selon l'une des revendications précédentes, le fluide étant un fluide compressible, le compteur (101) comprenant en outre un capteur de température (120) agencé pour mesurer une température du fluide dans le conduit, le circuit de traitement étant agencé pour, si la position courante de l'organe mobile est telle que le débit courant ne peut pas être mesuré par le dispositif de mesure ultrasonique, utiliser aussi la température du fluide pour évaluer le débit courant.

7. Compteur de fluide à ultrasons selon l'une des revendications précédentes, dans lequel la vanne (12) est une vanne à bille.

8. Procédé de mesure d'un débit courant d'un fluide, mis en œuvre dans le circuit de traitement (5) d'un compteur de fluide à ultrasons (1) selon l'une des revendications précédentes, et comprenant l'étape, si la position courante de l'organe mobile (14) est telle que le débit courant ne peut pas être mesuré par le dispositif de mesure ultrasonique (6), d'évaluer le débit courant en fonction de la position courante de l'organe mobile, de la pression du fluide au débit courant, et de la pression du fluide à débit nul.

9. Procédé de mesure selon la revendication 8, comprenant les étapes, si la position courante de l'organe mobile est telle que le débit courant ne peut pas être mesuré par le dispositif de mesure ultrasonique, de :

   - mesurer la position courante de l'organe mobile (14) ;
   - ouvrir entièrement la vanne (12) ;
   - utiliser le dispositif de mesure ultrasonique (6) pour mesurer le débit courant ;

- attendre que le débit courant soit nul ;
- acquérir alors au moins une mesure de pression produite par le capteur de pression (16), et évaluer ainsi la pression du fluide à débit nul ;
- remettre l'organe mobile dans ladite position courante ;
- acquérir alors au moins une mesure de pression produite par le capteur de pression, et évaluer ainsi la pression du fluide au débit courant ;
- estimer le débit courant en fonction de ladite position courante de l'organe mobile, de la pression du fluide au débit courant, et de la pression du fluide à débit nul.

10. Procédé de mesure selon l'une des revendications 8 ou 9, comprenant en outre les étapes de :

- détecter un intervalle de temps qui s'étend entre un temps t1 et un temps t2 tels que :

  ◦ au temps t1, une valeur de la pression du fluide passe d'une valeur égale à une pression du réseau à une autre valeur ;
  ◦ au temps t2, la valeur de la pression du fluide redevient égale à la pression du réseau ;

- intégrer le débit courant sur l'intervalle de temps [tl ; t2] pour calculer le volume consommé.

11. Programme d'ordinateur comprenant des instructions qui conduisent le circuit de traitement (5) du compteur selon l'une des revendications 1 à 7 à exécuter les étapes du procédé de mesure selon l'une des revendications 8 à 10.

12. Support d'enregistrement lisible par ordinateur, sur lequel est enregistré le programme d'ordinateur selon la revendication 11.

13. Procédé de régulation d'un débit courant d'un fluide, mis en oeuvre dans le circuit de traitement (5) d'un compteur de fluide à ultrasons (1) selon l'une des revendications 1 à 7, et comprenant les étapes de :

- acquérir une consigne de débit ;
- mesurer le débit courant en utilisant le procédé de mesure selon l'une des revendications 8 à 10 ;
- adapter la position courante de l'organe mobile en fonction d'un écart entre la consigne de débit et le débit courant.

14. Programme d'ordinateur comprenant des instructions qui conduisent le circuit de traitement (5) du compteur selon l'une des revendications 1 à 7 à exécuter les étapes du procédé de régulation selon la revendication 13.

15. Support d'enregistrement lisible par ordinateur, sur lequel est enregistré le programme d'ordinateur selon la revendication 14.

**Patentansprüche**

1. Ultraschall-Fluidzähler (1), umfassend:

- eine Leitung (4), in der ein Fluid zirkulieren kann;
- eine Ultraschall-Messvorrichtung (6), die zwei Wandler (7a, 7b) umfasst, die ausgebildet sind, Ultraschallsignale in die Leitung (4) auszusenden und aus derselben zu empfangen, wobei die Ultraschall-Messvorrichtung ausgebildet ist, einen aktuellen Durchsatz des Fluids anhand der Flugzeit der Ultraschallsignale zwischen den Wandlern zu evaluieren;
- ein Ventil (12), das gemäß einer Länge der Leitung zwischen den beiden Wandlern positioniert ist, wobei das Ventil ein bewegliches Element (14) umfasst, das sich in der Leitung erstreckt und von dem eine aktuelle Position gesteuert werden kann, um den aktuellen Durchsatz des Fluids zu kontrollieren;
- einen Positionssensor (15), der ausgebildet ist, die aktuelle Position des beweglichen Elements zu messen;
- einen Drucksensor (16), der ausgebildet ist, einen Druck des Fluids in der Leitung zu messen;

**dadurch gekennzeichnet, dass** der Ultraschall-Fluidzähler ferner umfasst:

- eine Verarbeitungsschaltung (5), die ausgebildet ist, um, wenn die aktuelle Position des beweglichen Elements derart ist, dass der aktuelle Durchsatz von der Ultraschall-Messvorrichtung nicht gemessen werden kann, den aktuellen Durchsatz in Abhängigkeit von der aktuellen Position des beweglichen Elements, dem Druck des Fluids bei aktuellem Durchsatz und dem Druck des Fluids bei Null-Durchsatz zu evaluieren.

2. Ultraschall-Fluidzähler nach Anspruch 1, bei dem der Drucksensor (16) stromaufwärts des Ventils (12) positioniert ist.

3. Ultraschall-Fluidzähler nach einem der vorhergehenden Ansprüche, bei dem die Verarbeitungsschaltung (5) ausgebildet ist, den Druck des Fluids bei Null-Durchsatz zu evaluieren, um:

   - das Ventil (12) ganz zu öffnen;
   - die Ultraschall-Messvorrichtung (6) zu verwenden, um den aktuellen Durchsatz zu messen;
   - zu warten, bis der aktuelle Durchsatz Null ist;
   - daraufhin mindestens eine Druckmessung zu erfassen, die von dem Drucksensor (16) erzeugt wird.

4. Ultraschall-Fluidzähler nach Anspruch 2, bei dem die Verarbeitungsschaltung ausgebildet ist, den Druck des Fluids bei Null-Durchsatz zu evaluieren, um:

   - das Ventil (12) ganz zu schließen;
   - daraufhin mindestens eine Druckmessung zu erfassen, die von dem Drucksensor (16) erzeugt wird.

5. Ultraschall-Fluidzähler nach einem der vorhergehenden Ansprüche, bei dem die Verarbeitungsschaltung (5) ausgebildet ist, um, wenn die aktuelle Position des beweglichen Elements (14) derart ist, dass der aktuelle Durchsatz von der Ultraschallmessvorrichtung (6) gemessen werden kann, die Messung des aktuellen Durchsatzes des Fluids zu konsolidieren, die von der Ultraschallmessvorrichtung erzeugt wird, indem der Druck des Fluids verwendet wird.

6. Ultraschall-Fluidzähler nach einem der vorhergehenden Ansprüche, wobei das Fluid ein komprimierbares Fluid ist, wobei der Zähler (101) ferner einen Temperatursensor (120) umfasst, der ausgebildet ist, eine Temperatur des Fluids in der Leitung zu messen, wobei die Verarbeitungsschaltung ausgebildet ist, um, wenn die aktuelle Position des beweglichen Elements derart ist, dass der aktuelle Durchsatz von der Ultraschall-Messvorrichtung nicht gemessen werden kann, auch die Temperatur des Fluids zu verwenden, um den aktuellen Durchsatz zu evaluieren.

7. Ultraschall-Fluidzähler nach einem der vorhergehenden Ansprüche, bei dem das Ventil (12) ein Kugelventil ist.

8. Verfahren zum Messen eines aktuellen Durchsatzes eines Fluids, das in der Verarbeitungsschaltung (5) eines Ultraschall-Fluidzählers (1) nach einem der vorhergehenden Ansprüche durchgeführt wird und, wenn die aktuelle Position des beweglichen Elements (14) derart ist, dass der aktuelle Durchsatz von der Ultraschall-Messvorrichtung (6) nicht gemessen werden kann, umfassend den Schritt des Evaluierens des aktuellen Durchsatzes in Abhängigkeit von der aktuellen Position des beweglichen Elements, dem Druck des Fluids bei dem aktuellen Durchsatz und dem Druck des Fluids bei Null-Durchsatz.

9. Verfahren zum Messen nach Anspruch 8, umfassend die Schritte, wenn die aktuelle Position des beweglichen Elements derart ist, dass der aktuelle Durchsatz von der Ultraschall-Messvorrichtung nicht gemessen werden kann:

   - Messen der aktuellen Position des beweglichen Elements (14);
   - vollständiges Öffnen des Ventils (12);
   - Verwenden der Ultraschall-Messvorrichtung (6) zum Messen des aktuellen Durchsatzes;
   - Warten, bis der aktuelle Durchsatz Null ist;
   - daraufhin Erfassen mindestens einer Druckmessung, die von dem Drucksensor (16) erzeugt wird, und somit Evaluieren des Drucks des Fluids bei Null-Durchsatz;
   - Zurückbringen des beweglichen Elements in die genannte aktuelle Position;
   - daraufhin Erfassen mindestens einer Druckmessung, die von dem Drucksensor erzeugt wird, und somit Evaluieren des Drucks des Fluids bei aktuellem Durchsatz;
   - Schätzen des aktuellen Durchsatzes in Abhängigkeit von der genannten aktuellen Position des beweglichen Elements, dem Druck des Fluids bei aktuellem Durchsatz und dem Druck des Fluids bei Null-Durchsatz.

10. Verfahren zum Messen nach einem der Ansprüche 8 oder 9, ferner umfassend die Schritte:

   - Detektieren eines Zeitintervalls, das sich zwischen einem Zeitpunkt t1 und einem Zeitpunkt t2 erstreckt, sodass:

o zum Zeitpunkt t1 ein Wert des Drucks des Fluids von einem Wert gleich einem Druck des Netzes auf einen anderen Wert übergeht;
o zum Zeitpunkt t2 der Wert des Drucks des Fluids wieder gleich dem Druck des Netzes wird;

- Integrieren des aktuellen Durchsatzes über das Zeitintervall [t1; t2], um das verbrauchte Volumen zu berechnen.

11. Computerprogramm, umfassend Anweisungen, die die Verarbeitungsschaltung (5) des Zählers nach einem der Ansprüche 1 bis 7 dazu veranlassen, die Schritte des Verfahrens zum Messen nach einem der Ansprüche 8 bis 10 auszuführen.

12. Computerlesbarer Aufzeichnungsträger, auf dem das Computerprogramm nach Anspruch 11 gespeichert ist.

13. Verfahren zur Regelung eines aktuellen Durchsatzes eines Fluids, das in der Verarbeitungsschaltung (5) eines Ultraschall-Fluidzählers (1) nach einem der Ansprüche 1 bis 7 durchgeführt wird und die Schritte umfasst:

- Erfassen eines Durchsatzsollwerts;
- Messen des aktuellen Durchsatzes, indem das Messverfahren nach einem der Ansprüche 8 bis 10 verwendet wird;
- Anpassen der aktuellen Position des beweglichen Elements in Abhängigkeit von einer Differenz zwischen dem Durchsatzsollwert und dem aktuellen Durchsatz.

14. Computerprogramm, umfassend Anweisungen, die die Verarbeitungsschaltung (5) des Zählers nach einem der Ansprüche 1 bis 7 dazu veranlassen, die Schritte des Regelungsverfahrens nach Anspruch 13 auszuführen.

15. Computerlesbarer Aufzeichnungsträger, auf dem das Computerprogramm nach Anspruch 14 gespeichert ist.

**Claims**

1. A ultrasonic fluid meter (1) comprising:

a conduit (4) in which a fluid can flow;
an ultrasonic measurement device (6) comprising two transducers (7a, 7b) arranged to emit and receive ultrasonic signals in the conduit, the ultrasonic measurement device being arranged to evaluate a current flow rate of the fluid from the time of flight of the ultrasonic signals between the transducers;
a valve (12) positioned along a length of the conduit between the two transducers, the valve comprising a movable member (14) which extends in the conduit and for which a current position can be regulated in order to control the current flow rate of the fluid;
a position sensor (15) configured to measure the current position of the movable member;
a pressure sensor (16) arranged to measure the pressure of the fluid in the conduit;

**characterized in that** the fluid meter further comprises :
a processing circuit (5) arranged, if the current position of the movable member is such that the current flow rate cannot be measured by the ultrasonic measurement device, to evaluate the current flow rate as a function of the current position of the movable member, of the pressure of the fluid to the current flow rate, and of the pressure of the fluid at zero flow rate.

2. The ultrasonic fluid meter according to claim 1, wherein the pressure sensor (16) is positioned upstream of the valve (12) .

3. The ultrasonic fluid meter according to any one of the preceding claims, wherein the processing circuit (5) is configured to evaluate the pressure of the fluid at zero flow rate, to:

fully open the valve (12);
use the ultrasonic measuring device (6) to measure the current flow rate;
wait until the current flow rate becomes zero;
then acquire at least one pressure measurement produced by the pressure sensor (16).

**4.** The ultrasonic fluid meter according to claim 2, wherein the processing circuit is configured to evaluate the pressure of the fluid at zero flow rate, to:

> fully close the valve (12);
> then acquire at least one pressure measurement produced by the pressure sensor (16).

**5.** The ultrasonic fluid meter according to any one of the preceding claims, wherein the processing circuit (5) is arranged, if the current position of the movable member (14) is such that the current flow rate can be measured by the ultrasonic measuring device (6), to consolidate the measurement of the current flow rate of the fluid, produced by the ultrasonic measuring device, using the pressure of the fluid.

**6.** The ultrasonic fluid meter according to any one of the preceding claims, the fluid being a compressible fluid, the meter (101) further comprising a temperature sensor (120) configured to measure a temperature of the fluid in the conduit, the processing circuit being configured such that, if the current position of the movable member is such that the current flow rate cannot be measured by the ultrasonic measuring device, it also uses the temperature of the fluid to evaluate the current flow rate.

**7.** The ultrasonic fluid meter according to any one of the preceding claims, wherein the valve (12) is a ball valve.

**8.** A method for measuring a current flow rate of a fluid, carried out in the processing circuit (5) of an ultrasonic fluid meter according to any one of the preceding claims and, if the current position of the movable member (14) is such that the current flow rate cannot be measured by the ultrasonic measuring device (6), comprising the step of evaluating the current flow rate as a function of the current position of the movable member, of the pressure of the fluid to the current flow rate, and of the pressure of the fluid at zero flow rate.

**9.** The measurement method according to claim 8, wherein, if the current position of the movable member is such that the current flow rate can be measured by the ultrasonic measuring device, it comprises the steps of

> measuring the current position of the mobile member (14) ;
> fully opening the valve (12);
> using the ultrasonic measuring device (6) to measure the current flow rate;
> waiting until the current flow rate becomes zero;
> acquiring at least one pressure measurement produced by the pressure sensor (16), and thus evaluating the pressure of the fluid at zero flow rate;
> returning the movable member to said current position;
> then acquiring at least one pressure measurement produced by the pressure sensor, and thus evaluating the pressure of the fluid at the current flow rate;
> estimating the current flow rate as a function of said current position of the moving member, of the pressure of the fluid at the current flow rate, and of the pressure of the fluid at zero flow rate.

**10.** The measurement method according to any one of claims 8 to 9, further comprising the steps of:

> detecting a time interval which extends between a time t1 and a time t2 such that:
>
> > ∘ at time t1, a value of the pressure of the fluid changes from a value equal to a pressure of the network to another value;
> > ∘ at time t2, the value of the pressure of the fluid again becomes equal to the pressure of the network;
>
> integrating the current flow rate over the time interval [t1; t2] in order to calculate the volume consumed.

**11.** A computer program comprising instructions which cause the processing circuit (5) of the meter according to any one of claims 1 to 7 to execute the steps of the measurement method as claimed in any one of claims 8 to 10.

**12.** Recording media which can be read by a computer, on which the computer program according to claim 11 is recorded.

**13.** A method for regulating a current flow rate of a fluid, which is carried out in a processing circuit (5) of an ultrasonic fluid meter (1) according to any one of claims 1 to 7 and comprising the steps of:

acquiring a flow rate setpoint;
estimating the current flow rate using the measurement method according to any one of claims 8 to 10;
adapting the current position of the movable member as a function of a difference between the flow rate setpoint and the current flow rate.

14. A computer program comprising instructions which cause the processing circuit (5) of the meter according to any one of claims 1 to 7 to execute the steps of the regulation method according to claim 13.

15. Storage media which can be read by a computer, on which the computer program according to claim 14 is stored.

Fig. 1

Fig. 2

Fig. 3

| | $D_1$ [L/h] | $D_2$ [L/h] | $D_3$ [L/h] | $D_4$ [L/h] |
|---|---|---|---|---|
| $T_1$ [°C] | $\Delta TOF_{11}$ | ... | ... | ... |
| $T_2$ [°C] | $\Delta TOF_{21}$ | $\Delta TOF_{22}$ | ... | ... |
| $T_3$ [°C] | $\Delta TOF_{31}$ | $\Delta TOF_{32}$ | $\Delta TOF_{33}$ | ... |

Fig. 4

Fig. 5

Débits

100% ouverte

C1
C2
C3

100% fermée          100% fermée          Angle de la ball-valve

Fig. 6

| P=1 bar | $D_1$ [L/h] | $D_2$ [L/h] | $D_3$ [L/h] | $D_4$ [L/h] |
|---------|-------------|-------------|-------------|-------------|

| P=6 bar | $D_1$ [L/h] | $D_2$ [L/h] | $D_3$ [L/h] | $D_4$ [L/h] |
|---------|-------------|-------------|-------------|-------------|

| P=16 bar | $D_1$ [L/h] | $D_2$ [L/h] | $D_3$ [L/h] | $D_4$ [L/h] |
|----------|-------------|-------------|-------------|-------------|
| $\vartheta_1$ [rad] | $\Delta P_{11}$ | ... | ... | ... |
| $\vartheta_2$ [rad] | $\Delta P_{21}$ | $\Delta P_{22}$ | ... | ... |
| $\vartheta_3$ [rad] | $\Delta P_{31}$ | $\Delta P_{32}$ | $\Delta P_{33}$ | ... |

18

Fig. 7

Fig. 8

Vitesse du son dans l'eau en fonction de la pression à 20°C

Fig. 9

Fig. 10

Fig. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102019105948 A1